# EUROPEAN PATENT SPECIFICATION

(11) **EP 2 893 185 B1**
(45) Date of publication and mention of the grant of the patent: **09.11.2016**
(21) Application number: 13759443.8
(22) Date of filing: 04.09.2013
(51) Int. Cl.: F03D 3/00, F03D 3/04, F03D 3/06

(54) **MULTIBLADE TURBINE WITH POLYGONAL CROSS-SECTION CORE.**
TURBINE MIT MEHREREN SCHAUFELN UND KERN MIT POLYGONALEM QUERSCHNITT
TURBINE MULTIPALE AVEC CENTRE À SECTION TRANSVERSALE POLYGONALE

(30) Priority: 06.09.2012 IT MC20120074
(43) Date of publication of application: 15.07.2015
(73) Proprietor: Luciani, Artemio, 62012 Civitanova Marche (IT); D'Ambrosio, Giuseppe, 63074 San Benedetto del Tronto (IT)
(72) Inventor: Luciani, Artemio, 62012 Civitanova Marche (IT); D'Ambrosio, Giuseppe, 63074 San Benedetto del Tronto (IT)
(74) Representative: Statti, Francesco
(86) International application number: PCT/EP2013/002653
(87) International publication number: WO 2014/037102

(56) References cited:
- WO-A1-2010/124692
- WO-A2-2008/141813
- WO-A2-2012/008862
- DE-A1- 3 315 439
- DE-A1-102007 060 721
- DE-A1-102010 045 801
- DE-U1- 9 314 187
- DE-U1- 20 112 763
- DE-U1-202008 010 395
- US-A1- 2003 175 109
- US-A1- 2011 250 069
- US-A1- 2011 272 948

## Description

### Field of invention

The present invention can be classified as vertical axis turbine (free or ducted) and consists of a device that converts renewable energies (coming from the wind and the wave motion of the sea) into mechanical energy, available to the axis of the device itself, that with further applications can be transformed into electricity for a wider use.

### Background of invention

The demand for higher availability of energy by the industry requires the production of more and more energy, often with serious consequences for the environment, because it is produced with fuels that consume atmospheric oxygen and release a large amount of carbon dioxide and pollutant dusts.

Among the existing renewable sources, the production of energy from waves have had a significant boost. Among the main technologies, the oscillating water column is one of the most advanced researches in Italy as well.

However, the particular conditions of the Mediterranean Sea (low waves) put restrictions on its use and require further research and experimentation.

Among the renewable sources for the production of energy from the wave motion, the state of the art are the following patents:
- US2011/0250069 A1
- DE102010045801 A1
- WO2012/008862 A2.

Patent US2011/0250069 A1 discloses a wind turbine with vertical axis positioned horizontally which possesses the following characteristics:
- It is ducted;
- It is not symmetrical;
- It mounts naca type blades for aerodynamic lift;
- It is equipped with valves that modulate the air flow through the turbine rotor, leaving unaltered the sections (or areas) of passage of the fluids through the turbine itself.

Such a turbine results to have low energy efficiency, since the device belongs to the class of pulsating flow turbines.

The blades of such a turbine, being configured for aerodynamic lift and not for drag, are not suitable to effectively recover the kinetic energy of the fluid exiting the rotor. Furthermore, the configuration of the turbine blades of said patent, being the same turbine characterized by rotary motion instead of linear, implies the following elements:
- Low torques on the axis of the turbine when the waves are low;
- Stalled condition, that is to say loss of power, when the number of revolutions is high due to high waves (for example 1500 rpm / minute), as it usually is necessary when matching the turbine with an electric generator in OWC plants applications.

As the blades are not curved, thus not having the inner surface always concave and the outer surface always convex, they do not oppose the maximum resistance to the thrust exerted on the blades by the fluids that pass through the turbine rotor and therefore they do not obtain the maximum energy efficiency.

The overall energy efficiency of said turbine is lower than that of the present invention, because in patent US2011/0250069 A1 the reliefs applied to the walls of the conveyors perform the function of stiffening of their surfaces and not that of improvement of the fluid entry into the turbine; this because the so configured reliefs entail an increase of the contact surface between air and duct, with a consequent increase of passive friction. The surface of said conveyors, not being concave or convex in the direction of the air flow, does not entail a significant and gradual progression of the impact of the same air flow with the rotor blades nor a considerable reduction in noise and vibration.

Furthermore, since the turbine of patent US2011/0250069 A1 is not symmetric, the reversal of fluid flow is not permitted, thus the same efficiency in both directions cannot be guaranteed.

Patent DE102010045801 A1 discloses a wind turbine with vertical axis, not ducted, with a multiblade rotor which has a central core with a polygonal cross-section and three or more surfaces and areas with a reduced passage section. The rotor blades, not being shaped with the inner surface always concave and the outer surface always convex, generate passive turbulence in correspondence of the central core that does not facilitate the discharge of the air flow through the passage sections of the turbine rotor.

Patent WO2012008862 A2 discloses a wind turbine with vertical axis on which the rotor blades are mounted. In the central part of the rotor there is a means of controlling the air flow consisting of a hexagonal prism covered from top and bottom with covers that improve the aerodynamic properties by protecting the elements of construction from the atmospheric effects.

By applying the core of the devices of patents DE102010045801 A1 and WO2012/008862 A2 to the device of patent US2011/0250069 A1 the fluids flow towards the blades that are hidden in the opposite part of the rotor would stop (with the formation of harmful turbulence), as the blades of patent US2011/0250069 A1 are not shaped to receive and recover the kinetic energy of the fluid exiting the turbine. Therefore this does not resolve the issue of energy efficiency, as the blade configuration is incompatible with the presence of the cores of patents DE102010045801 A1 and WO2012/008862 A2.

### Disclosure of invention

The invention object of the present patent application for industrial invention advantageously solves the problem of the production of energy from the wave motion, compared to the current applications of other systems that are less efficient in the particular conditions of low waves.

Purpose of the present invention is to build a turbine for the production of energy from the wave motion, which is:
1. Compact in size and within size limits;
2. Composed of a single rotor splittable by means of dividing plates into compartments respectively configured as increasing percentages of the entire rotor;
3. simple, symmetric and able to guarantee the same energy efficiency even when the fluid flow is reversed;
4. capable of delivering a high specific power;
5. suitable for and very efficient in OWC plants in alternative to the already known WELLS turbines with horizontal axis;
6. variable displacement for the realization of the resonant condition needed in the OWC plants;
7. active with both low and high waves thus solving both the problems of turbine start-up with low pressures and the turbine stall problems (power loss) with high pressures (which occurs in OWC plants);
8. low noise and low vibration;
9. able to develop high torques available to the axis of the turbine even with low rpm.

These and other objects are achieved with the present invention, which relates to a device that converts renewable energy (from the wind and the wave motion of the sea) into mechanical energy - available to the axis of the device itself - that with additional applications can be transformed into electricity for wider use.

The present invention can be classified in the class of vertical axis turbines (free or ducted), which have the characteristic that the reversal of fluid flow does not imply the reversal of the turbine blades direction of rotation, thus offering considerable advantages in practical applications.

### Brief description of drawings

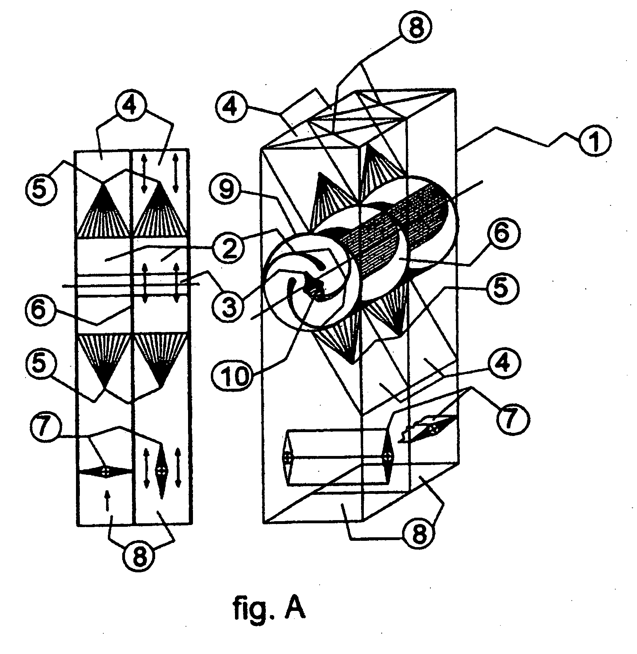

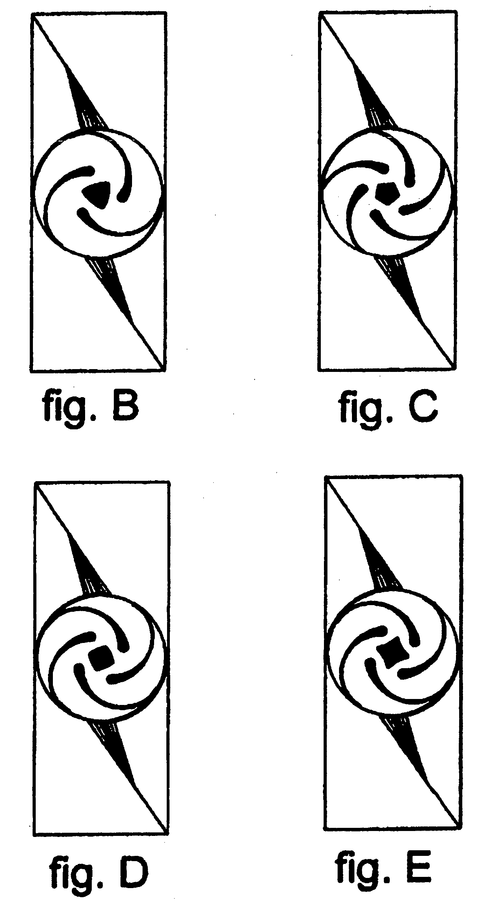

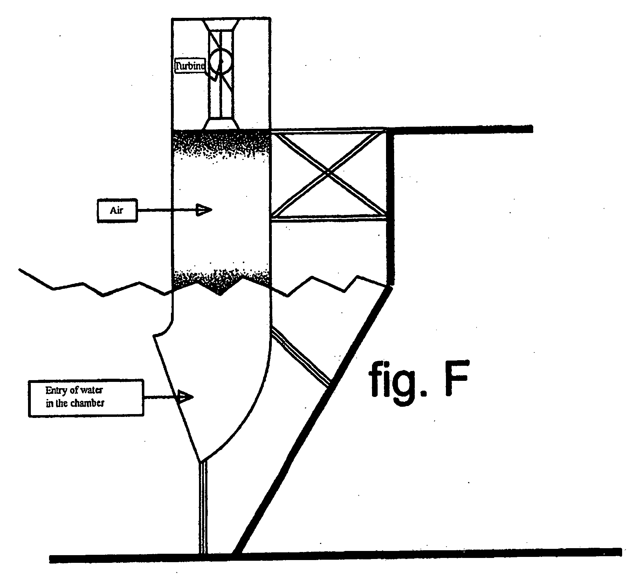

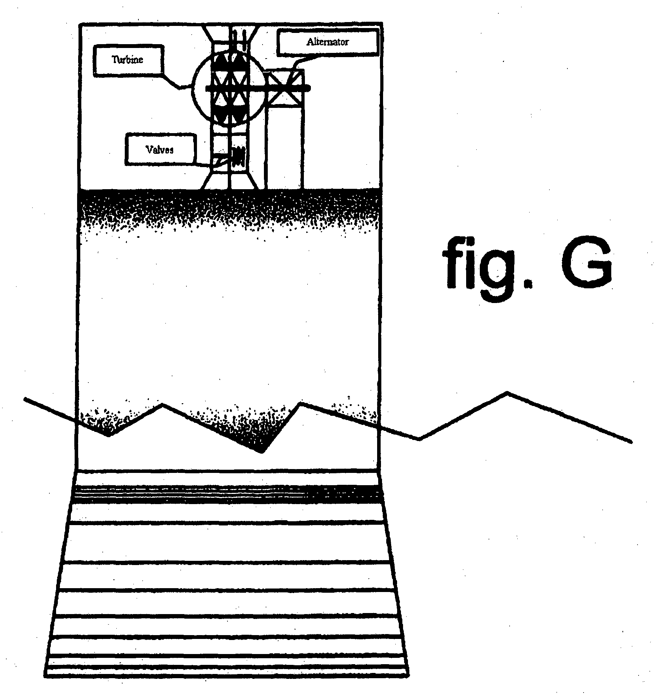

Further characteristics and advantages of the invention will become better evident from the description of a form of execution, preferred but not exclusive of the product object of the present patent application, illustrated by way of non limiting example in the drawing units, where:
- fig. A represents the axonometric schematic view, in which all constituent components of the present device are identified;
- fig. B schematically illustrates a turbine with three blades (2) with a rotor or polygonal central core (3) with a triangular cross-section, with convex surfaces, and it is a variant compared to the configuration of fig. A (rotor with concave surfaces);
- Figures C, D, E, schematically represent the configurations of the device with four and five turbine blades (2) with the respective central cores and their variants or alternatives;
- Figures F and G, side view and front view of the device, schematically illustrate an example of application of the device in sea, coupled to an oscillating water column plant.

### Detailed description of invention

The invention, according to the schematic representation of Fig. A of the enclosed drawing, includes:
- a casing (1) which acts as a support and contains inside the fixed and mobile parts of the device;
- blades (2), rotating, that form the rotor of the turbine and are shaped in suitable profiles having high aerodynamic efficiency. They generate together with the central core (3) with polygonal section a reduction of the passage section, which implies an increase in speed of the fluids due to the pressure energy that they possess at the turbine inlet. This energy is transformed into kinetic energy, that is recovered mainly at the rotor outlet. These "naca type" blades, shaped and positioned in reverse or opposite to the usual aerodynamic applications, are joined by fillet in correspondence of the core and solve the problem of passive turbulences that otherwise would be created when the air flow passes through the areas of the turbine compartments;
- a core with a rotating polygonal cross section (3) that represents the most innovative and resolving element of the whole turbine. It allows a better management of the flow of fluids (both incoming and outgoing) that feed the turbine blades (2) and the core itself (3), thus achieving better overall energy efficiencies. The core, as by the schematic drawings, illustrative and not limiting, is characterized by the fact that its surfaces can be configured as flat, concave or convex surfaces;
- an inclined or curved wall (4) that optimizes the entry of fluids in the rotating body of the turbine, where grooves or reliefs (5) can be applied;
- flat or curved grooves or reliefs (5), which, applied to the inclined wall (4), allow a gradual impact between the rotor blades (2) of the turbine and the fluids flow entering and exiting, thus ensuring a significant improvement in overall energy efficiency of the device and a significant reduction of noise pollution (noise);
- plates (6) that, inserted between the blades, create compartments that fractionate the displacement or the volume of the rotating part of the turbine itself and that can be fed separately by means of the valves (7) and the respective supply ducts (8) which guide the fluids entering and exiting the turbine. The subdivision of the turbine in separate compartments, which can be activated (or fed) all together or separately by means of valves (7), allows efficiency optimization by enabling the adjustment of the technical parameters of the device depending on quantity and on speed of the fluids that pass through the turbine itself;
- valves (7) that have the function of activating the supply ducts (8) and that fulfill an active safety function, because they can fully close the inflow of fluids that feed the turbine, allowing a safe shutdown of the device to easily carry out all the checks and the ordinary and extraordinary maintenance that may be necessary.

Later on we will refer to the specific application in an oscillating water column (OWC) plant, but the device (multi blades turbine with central rotating core) in its variants may be applied to other types of uses as well.

The object of the present invention is a turbine that may be split into compartments when the turbine itself is used in oscillating water column (OWC) plants, while has not to be fractionated if it is used as a wind turbine as the dividing plates (6) increase the contact surface with the air generating passive friction with consequent loss of performance and overall energy efficiency.

A single inlet deformation (5) and a single outlet deformation (5) is applied to the walls (4) of the conveyor, for each turbine compartment.

These dividing plates (6) realize compartments respectively representing an increasing percentage of the entire turbine rotor.

These compartments, individually fed through the ducts (8), represent the respective percentage of the volume of the active turbine rotor.

By activating and combining the various compartments, a further and increasing percentage of the turbine is activated for the passage of fluids through the body of the turbine itself.

The high diversity and progressiveness of the percentages of the active sections of the turbine is designed to achieve the high resonance coefficient of the OWC plant.

In a plant (of the oscillating water column type) the oscillatory movement of the water due to wave motion compresses (in the exhalation phase) and aspires (in the inhalation phase) the air present in a suitably designed chamber through a duct in which there is a turbine that supplies power to an electric generator connected to the axis of the turbine itself.

The fluid (air), coming from the oscillating water column chamber, passes through the supply ducts (8), which are in correspondence of the respective compartments located in the rotor of the turbine. The compartments are realized by means of dividing plates (6).

If the ducts are active, and the valves (7) are open, the passage of air towards the rotor of the turbine - suitably conveyed by ducts (8) and modulated by the grooves or reliefs (5) applied to the inclined wall (4) - is allowed.

These valves (7), located into the ducts (8), are configured only in the open or closed positions; furthermore the valves (7) do not have the function of modulating the air flow inside the compartment, but to vary the active displacement of the turbine, that is to say that the valves (7) regulate the areas for the passage of fluids, thus directing the entire fluid flow only to the active compartments of the turbine. This feature is essential to obtain high coefficients of resonance in the oscillating water column chamber in presence of both low and high waves and in any case with any wave frequency (or period) of the wave motion; this allows to achieve high energy efficiencies in the plants for the recovery of energy from the wave motion.

In this way the technical parameters (pressure and volume) of the air flow through the turbine ducts (8) are optimized, thus raising the energy efficiency of the system formed by the OWC and the multi blades turbine characterized by the variable displacement obtained by means of valves.

When the air comes in contact with the blades (2) of the turbine rotor, it transfers them a large part of its energy (kinetic and pressure), which is transformed into mechanical energy available directly to the axis of the turbine for further applications.

The present invention is characterized by having a central rotating core (3) with polygonal cross-section, which is the most innovative and advantageous element of the turbine assembly. It performs the function of dividing device and orientation of the fluids flows, that pass through the turbine rotor, thus elevating its overall efficiency.

The surfaces of the central core (3) - which may be flat, concave or convex in shape - with the blades (2), realize a zone (10) of reduced passage section for the air (Venturi tube type), that, during the passage through said zone (with reduced section), converts the pressure energy that is still owned by the fluid into kinetic energy (speed increase), energy which is then recovered by the blades (2), at the exit stage of the fluids from the body of the rotor. Being the turbine symmetrical, the same efficiencies are obtained even when the flow of fluid (air) is reversed. The above-mentioned areas (10) of the turbine compartments are always active when the valves (7) of the ducts (8) are open and play important functions, as follows:
1. dividing and guiding the flow within the turbine;
2. re-equilibrating the pressures of the compartments;
3. reducing the vibrations caused by the large variations of pressure, typical in OWC plants.

The application of the central core (3) - together with the other components (2-4-5-6-7-8-9) - in the multi blades turbines has the advantage, compared to the state of the art of the existing applications without such a device (3), to work actively, with positive efficiencies, even with extremely low wave conditions and low air speed, as they can vary and combine the technical parameters of flow and pressure in the turbine to always have maximum efficiencies and optimal rpm.

The grooves or reliefs (5) located within the ducts (8) allow a gradual impact between the blades (2) and the air flow passing through them, with the consequent decrease of the sound level (noise) and with the damping of possible harmful vibrations.

The conveyors (9) are connected to the walls (4) and to the grooves or reliefs (5) and complete the implementation of the compartments generated in the turbine housing by the dividing plates (6), containing and supporting the diversion of air flows through the turbine.

The materials and the dimensions of the invention as above described, illustrated in the accompanying drawings and claimed below, may be any according to the specific requirements. Moreover, all the details can be replaced with others, technically equivalent, without leaving the protective scope of the present patent application.

## Claims

1. Multi blades turbine with central core with polygonal cross-section and being a ducted system composed of:
• a container casing (1) with a structural function and supporting the fixed and mobile parts of the device;
• rotating blades (2), with naca type profile, which form the rotor of the turbine;
• a central core (3) with a polygonal cross-section with three or more surfaces;
• an inclined or curved wall (4) to direct the flow of fluids in the turbine;
• grooves or reliefs (5) applied to the surface of the wall (4) to improve the impact of the fluids with the blades (2) of the rotor;
• dividing plates (6) placed in adequate number along the axis of rotation of the turbine, which create compartments or subdivisions of the volume of the rotating body of the turbine itself;
• valves (7) that open and close the flow of fluids in ducts (8) that feed the turbine compartments;
• ducts (8) placed in correspondence of the relevant compartments that optimize the technical characteristics of fluid flow (velocity and pressure);
• fixed conveyors (9) that are connected to the walls (4) and to the grooves or reliefs (5) and that complete the compartments created with the rotating dividing plates (6);
• reduced passage section areas (10) (Venturi tube type) placed between the blades and the central core, in which an increase in the velocity of the fluids generates during the passage through the same;
wherein fluids are completely channeled, conveyed to the rotor of the turbine and forced to lap on the blades (2) and the central core (3).

2. Multi blades turbine according to claim 1, whose blades (2):
• are shaped in suitable profiles having high aerodynamic efficiency,
• are positioned in reverse or opposite to the usual aerodynamic applications,
• are joined by fillet in correspondence of the central core.

3. Multi blades turbine according to claim 1, whose rotating central core (3) with polygonal cross section performs the function of divider and orientation of the flow of the fluids that pass through the rotating body of the turbine.

4. Multi blades turbine according to claim 3, wherein the surfaces of the central core (3) can be configured as flat, concave or convex surfaces depending on the technical characteristics of the application scope.

5. Multi blades turbine according to claim 1, whose valves (7) open and close the ducts (8) that feed the respective compartments of the turbine so as to manage the energy resources available and that can completely stop the flow of fluids entering the turbine in the event of any maintenance and emergencies.

6. Multi blades turbine according to claim 1, whose rotating plates (6), placed in correspondence of the ducts (8), divide or fractionate the volume of the turbine into compartments, which in turn can all be activated or only part of them according to the flowof fluid available.

7. Multi blades turbine according to claim 1, whose grooves or reliefs (5) applied on the surface of the wall (4) allow a gradual impact between the fluids and the blades (2), a greater filling of the compartments and a significant damping of vibrations and noise.

## Patentansprüche

1. Turbine mit mehreren Schaufeln und Kern mit polygonalem Querschnitt, wobei es sich um ein Kanalsystem handelt, bestehend aus:
• einem Behältergehäuse (1) mit einer strukturellen Funktion, welches die festen und beweglichen Teile der Vorrichtung trägt;
• rotierenden Schaufeln (2), mit NACA-Profilbauart, welche den Rotor der Turbine bilden;
• einem zentralen Kern (3) mit einem polygonalen Querschnitt mit drei oder mehr Oberflächen;
• einer geneigten oder gewölbten Wand (4), um den Fluss von Fluiden in der Turbine auszurichten;
• Vertiefungen oder Reliefs (5) an der Oberfläche der Wand (4), um die Wirkung der Fluide mit den Schaufeln (2) des Rotors zu steigern;
• Trennplatten (6), die in angemessener Anzahl entlang der Drehachse der Turbine angeordnet sind, welche Kammern oder Unterteilungen vom Raum des Rotationskörpers der Turbine bilden;
• Ventilen (7), welche den Fluss von Fluiden in Kanälen (8) öffnen oder schließen, und die Turbinenkammern versorgen;
• Kanälen (8), welche entsprechend den Kammern angeordnet sind, und die technischen Eigenschaften des Fluidstroms optimieren (Geschwindigkeit und Druck);
• Festförderern (9), welche mit den Wänden (4) und den Vertiefungen oder Reliefs (5) verbunden sind und die Kammern ergänzen, welche durch die rotierenden Trennplatten (6) gebildet werden;
• reduzierten Durchtrittsquerschnittsflächen (10) (Venturi-Rohrtyp), welche zwischen den Schaufeln und dem zentralen Kern angeordnet sind, und in welchen die Geschwindigkeit der Fluide beim Durchtritt erhöht werden;
wobei die Fluide zum Rotor der Turbine vollständig kanalisiert und zum Turbinenrotor befördert werden und veranlasst werden die Schaufeln (2) und den zentralen Kern (3) zu umrunden.

2. Turbine mit mehreren Schaufeln nach Anspruch 1, deren Schaufeln (2):
• in geeigneten Profilen für einen hohen aerodynamischen Wirkungsgrad geformt sind,
• umgekehrt oder entgegengesetzt zu den üblichen aerodynamischen Anwendungen positioniert sind,
• entsprechend dem zentralen Kern durch eine Leiste verbunden sind.

3. Turbine mit mehreren Schaufeln nach Anspruch 1, deren Drehmittelkern (3) mit polygonalem Querschnitt die Funktion des Teilers durchführt und die Fluidströme ausrichtet, welche den rotierenden Körper der Turbine durchlaufen.

4. Turbine mit mehreren Schaufeln nach Anspruch 3, wobei die Oberflächen vom zentralen Kern (3) je nach den technischen Eigenschaften des Anwendungsbereichs flach, konkav oder konvex ausgebildet sein können.

5. Turbine mit mehreren Schaufeln nach Anspruch 1, deren Ventile (7) die Kanäle (8) öffnen und schließen, welche die jeweiligen Kammern der Turbine versorgen, um die vorhandenen Energieressourcen zu steuern und den Fluss an Fluiden vollständig stoppen können, welche bei einer Wartung oder in Notfällen in die Turbine gelangen.

6. Turbine mit mehreren Schaufeln nach Anspruch 1, deren rotierenden Platten (6), welche entsprechend den Kanälen (8) angeordnet sind, den Raum der Turbine in Kammern teilen und fraktionieren, die alle oder nur ein Teil von ihnen entsprechend dem vorhandenen Fluss an Fluid aktiviert werden können;

7. Turbine mit mehreren Schaufeln nach Anspruch 1, deren Vertiefungen oder Reliefs (5) auf der Oberfläche der Wand (4) eine allmähliche Wirkung zwischen den Fluiden und den Schaufeln (2) ermöglichen, sowie eine größere Befüllung der Kammern und eine erhebliche Dämpfung der Vibrationen und des Lärms.

## Revendications

1. Turbine multipale dotée d'une âme centrale à section transversale polygonale et constituant un système à conduit composé des éléments suivants:
• un boîtier (1) ayant une fonction structurelle et supportant les parties fixes et mobiles du dispositif;
• des pales rotatives (2) ayant un profil de type NACA, qui forment le rotor de la turbine;
• une âme centrale (3) à section transversale polygonale comportant trois surfaces ou plus;
• une paroi inclinée ou incurvée (4) pour diriger l'écoulement des fluides dans la turbine;
• des rainures ou des évidements (5) appliqués sur la surface de la paroi (4), pour améliorer l'impact des fluides grâce à l'action des pales (2) du rotor;
• des plaques de séparation (6) placées en nombre suffisant le long de l'axe de rotation de la turbine, qui créent des compartiments ou des subdivisions dans le volume du corps rotatif de la turbine;
• des vannes (7) permettant d'ouvrir et de fermer l'écoulement des fluides dans des conduits (8) alimentant les compartiments de la turbine;
• des conduits (8) placés au niveau des compartiments concernés, qui optimisent les caractéristiques techniques de l'écoulement des fluides (vitesse et pression);
• des convoyeurs fixes (9), qui sont reliés aux parois (4) ainsi qu'aux rainures ou évidements (5) et qui complètent les compartiments créés par les plaques de séparation rotatives (6);
• des zones de passage à section réduite (10) (du type tube de Venturi) placées entre les pales et l'âme centrale, dans lesquelles une augmentation de la vitesse des fluides se produit au cours de leur passage à travers celles-ci;
où les fluides sont complètement canalisés, convoyés jusqu'au rotor de la turbine et forcés de buter contre les pales (2) et l'âme centrale (3).

2. Turbine multipale selon la revendication 1, dont les pales (2):
• sont conçues selon des profils adaptés ayant un rendement aérodynamique élevé,
• sont positionnées inversement ou contrairement aux applications aérodynamiques habituelles,
• sont jointes par soudure au niveau de l'âme centrale.

3. Turbine multipale selon la revendication 1, dont l'âme centrale rotative (3) à section transversale polygonale remplit une fonction de séparation et d'orientation de l'écoulement des fluides qui passent à travers le corps rotatif de la turbine.

4. Turbine multipale selon la revendication 3, dans laquelle les surfaces de l'âme centrale (3) peuvent être configurées comme des surfaces plates, concaves ou convexes en fonction des caractéristiques techniques du domaine d'application.

5. Turbine multipale selon la revendication 1, dont les vannes (7) ouvrent et ferment les conduits (8) alimentant respectivement les compartiments de la turbine, de manière à gérer les ressources d'énergie disponibles, et sont en mesure d'arrêter totalement l'écoulement des fluides entrant dans la turbine en cas d'entretien ou d'urgence.

6. Turbine multipale selon la revendication 1, dont les plaques rotatives (6), situées au niveau des conduits (8), divisent ou fractionnent le volume de la turbine en compartiments, dont la totalité ou seulement une partie peut être tour à tour mise en oeuvre, en fonction de l'écoulement du fluide disponible.

7. Turbine multipale selon la revendication 1, dont les rainures ou évidements (5) appliqués sur la surface de la paroi (4) permettent un impact progressif entre les fluides et les pales (2), un remplissage plus important des compartiments et une atténuation significative des vibrations et du bruit.
